(19) Europäisches Patentamt
European Patent Office
Office européen des brevets

(11) Publication number: **0 001 480**
**B1**

(12) **EUROPEAN PATENT SPECIFICATION**

(45) Date of publication of patent specification: **17.06.81**

(51) Int. Cl.$^3$: **C 07 C 145/02, A 01 N 37/28**

(21) Application number: **78300365.0**

(22) Date of filing: **11.09.78**

(54) **Benzanilide derivative, its production and use as a fungicide and acaricide.**

(30) Priority: **15.09.77 US 833525**

(43) Date of publication of application:
**18.04.79 Bulletin 79/8**

(45) Publication of the grant of the European patent:
**17.06.81 Bulletin 81/24**

(84) Designated Contracting States:
**BE DE FR GB NL SE**

(56) References cited:
**DE - A - 1 542 710**
**DE - A - 1 800 836**
**DE - A - 2 014 026**
**DE - A - 2 557 950**
**DE - A - 2 611 902**
**US - A - 3 771 990**

(73) Proprietor: **STAUFFER CHEMICAL COMPANY**
**Westport Connecticut 06880 (US)**

(72) Inventor: **Lam, Hsiao-Ling**
**2736 San Antonio Drive**
**Walnut Creek, California 94598 (US)**
Inventor: **Pallos, Ferenc Marcus**
**21 El Caminito**
**Walnut Creek California 94598 (US)**

(74) Representative: **Smith, Sydney et al,**
**Elkington and Fife High Holborn House 52/54**
**High Holborn**
**London WC1V 6SH (GB)**

EP 0 001 480 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Benzanilide derivative, its production and use as a fungicide and acaricide

This invention relates to a new benzanilide derivative, to a process for the preparation thereof and to its use as a fungicide and acaricide.

In German Specification DE-A-2557950 there are described compounds of the general formula I

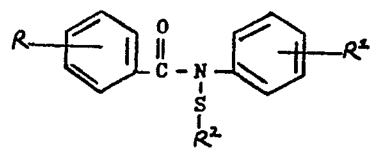

in which R represents chlorine, bromine, iodine or trifluoromethyl, in which the substituents R are preferably in the ortho position;

$R^1$ represents hydrogen, chlorine, bromine, iodine, trifluoromethyl, alkyl with 1 to 5 carbon atoms, alkoxy with 1 to 2 carbon atoms or alkylthio with 1 to 2 carbon atoms;

and

$R^2$ represents $—CCl_3$, $—CCl_2—CCl_2H$ or $CCl_2—CCl_2F$.

These compounds have a fungicidal activity.

We have now found that the compound N-1,1,2,2-tetrachloro-2-fluoroethylthio benzanilide which has the following structural formula

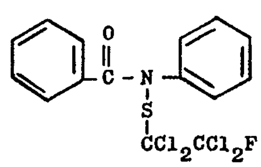

has activity both as a fungicide and an acaricide.

The invention therefore provides such compound as well as a process for the preparation thereof, the use thereof as a fungicide and acaricide and fungicidal and acaricidal compositions containing such compound.

This compound is distinguished from the closest compounds disclosed in the above mentioned German Specification by the fact that it is unsubstituted in the benzyl ring in the left hand side of the formula, that is where substituent R is to be found in the prior art.

In United States Specification A 3,771,990 and German Specification DE—A—2,014,026 there are disclosed classes of compounds which differ from the compounds of the present invention in that no aromatic groups are attached to the nitrogen atom or the carbonyl group. In German Specifications DE—A—1,542,710 and 1,800,836 compounds are disclosed which differ from the compound of the present invention in having an $SO_2$ group attached to the nitrogen atom instead of a carbonyl group.

The compound of the invention may be made by reacting benzanilide with $ClSCCl_2CCl_2F$. In a representative procedure the benzanilide is heated under reflux with sodium hydride and the $ClSCCl_2CCl_2F$ is then added to the cooled reaction mixture. The reaction product is then recovered for example by the procedure described in the example.

For application as a fungicide or acaricide the compound according to the invention may be applied as such or as a pesticidal composition when it is associated with an inert carrier or diluent. Such a pesticidal composition may take the form of a liquid composition such as an emulsion, suspension, solution, or aerosol spray. It may also take the form of a dust. Such compositions will, in general, contain, in addition to the active compound, the adjuvants which are found normally in pesticide compositions. In these compositions, the active compound of this invention can be employed as the sole pesticide component or it can be used in admixture with other compounds having similar utility. The pesticide compositions of this invention can contain, as adjuvants, organic solvents, such as sesame oil, xylene range solvents and heavy petroleum; water; emulsifying agents; surface active agents; talc; pyrophyllite; diatomite; gypsum; clays, and propellants, such as dichlorodifluoromethane. The compound according to the invention either as such or in the form of a pesticidal composition may be applied directly to the pest or to a habitat therefor, for example feedstuffs and seeds on which the pests feed. It is advantageous, particularly for application of the compound as such, that the compound itself is not volatile. In connection with the activity of the compound of the invention as a pesticide it is to be understood that it is not necessary that it should be active as such since the object of the invention, that is the control of fungi and acarids, is equally well served if the compound is rendered active by external influences, such as light or by some physiological action which occurs when the compound is ingested into the body of the pest.

The precise manner in which the pesticidal compositions of this invention are used in any particular instance will be readily apparent to a person skilled in the art. While the concentration of the active pesticide in the pesticidal composition may vary within quite wide limits, the concentration of the pesticide will not normally exceed 15.0% by weight of the total composition. Preferred compositions are solutions or suspensions containing 0.1 to 1.0% by weight of the active pesticide compound.

The following Examples illustrate the invention

Example 1 (Preparation of compound of invention)
N-1,1,2,2-TETRACHLORO-2-FLUOROETHYLTHIO BENZANILIDE

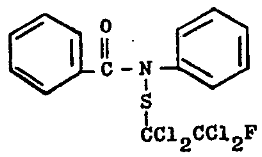

2.36 grams (0.012 mole) of benzanilide and 80 millilitres tetrahydrofuran were added to a three necked round bottom reaction flask equipped with a stirrer, reflux condenser and dropping funnel. Next, 0.4 grams, a mole excess, of sodium hydride was added and the mixture stirred at room temperature for one half hour and then refluxed for two hours. Next, 3.03 grams (0.012 mole) of $ClSCCl_2CCl_2F$ dissolved in 50 millilitres tetrahydrofuran were added dropwise over one hour to the reaction mixture which was cooled with an ice bath. After the addition, the reaction mixture was allowed to warm to room temperature and the reaction mixture was stirred overnight.

The solvent was removed from the reaction product by vacuum stripping. The reaction product was then dissolved in methylene chloride. Water was added to destroy any residual sodium hydride. The reaction product was washed three times with water and then dried over $MgSO_4$. The product was vacuum stripped and crystallized from isopropanol to yield 3.2 grams of the desired compound (hereinafter called compound No. 1). m.p. 77—78°C.

Example 2 (Evaluation of Activity of Compound No. 1).

*Foliar Fungicide Evaluation Tests*

A. Evaluation for Preventive Action

1. *Bean Rust Test*

Pinto bean plants (*Phaseolus vulgaris* L.) approximately 10 cm. tall were transplanted into sandy loam soil in three-inch clay pots. The plants were then inverted and dipped for two to three seconds in 50-50 acetone water solution of the test chemical. Test concentrations range from 1000 ppm downward. After the leaves had dried, they were inoculated with a water suspension of spores of the bean rust fungus (*Uromyces phaseoli* Arthur) and the plants were placed in an environment of 100% humidity for 24 hours. The plants were then removed from the humidity chamber and held until disease pustules appeared on the leaves. Effectiveness was recorded as the lowest concentration, in ppm which will provide 75% or greater reduction in pustule formation as compared to untreated, inoculated plants. These values are recorded in Table I.

2. *Bean Powdery Mildew Test*

The candidate chemical was prepared and applied in the same manner as for the bean rust test. After the plants were dry, the leaves were dusted with spores of the powdery mildew fungus (*Erysiphe polygoni* De Candolle) and the plants were retained in the greenhouse until the fungal growth appeared on the leaf surface. Effectiveness was recorded as the lowest concentration, in ppm, which will provide 75% or greater reduction in mycelial formation as compared to untreated, inoculated plants. Those values are recorded in Table I.

3. *Tomato Early Blight*

The candidate compound was dissolved in an appropriate solvent and diluted with a 50-50 acetone water solution. Four week old tomato (*Lycopersicon esculentum*) plants were then sprayed with the solution to the point of runoff. Test concentrations range from 1000 ppm downward. When the leaves were dry, they were inoculated with a water suspension of spores of the early blight fungus (*Alternaria solani* Ellis and Martin) and placed in an environment of 100% humidity for 48 hours. The plants were then removed from the humidity chamber and held until disease lesions appeared on the leaves. Effectiveness was recorded as the lowest concentration, in ppm, which will provide 75% or greater reduction in number of lesions formed as compared to untreated, inoculated plants. These values are recorded in Table I.

4. *Blue Grass Leaf Spot*

The candidate chemical was prepared and applied in the same manner as the tomato early blight test except that four week old Kentucky Bluegrass (*Poa pratensis*) plants were utilized as the host plant. When the leaves were dry, they were inoculated with a water suspension of spores of the blue grass leaf sport fungus (*Helminthosporium sativum*) and placed in an environment of 100% humidity for 48

hours. The plants were then removed from the humidity chamber and held until disease lesions appear on the leaves. Effectiveness was recorded as the lowest concentration, in ppm, which will provide 75% or greater reduction in number of lesions formed as compared to untreated, inoculated plants. These values are recorded in Table I.

B. Evaluation for Eradicant Action

1. *Bean Rust Test*

Untreated bean plants (*Phaseolus vulgaris* L.) are inoculated with spores of the bean rust fungus (*Uromyces phaseoli* Arthur) and placed in an environment with 100% humidity for 24 hours. The plants were then removed from the humidity chamber and held in the greenhouse for two days to allow the disease to become established. The candidate chemical was then prepared and applied in the same manner as in the bean rust test described above under Evaluation for Preventive Action. Eradicative effectiveness was recorded as the lowest concentration, in ppm, which would provide a 75% or greater reduction in number of pustules appearing on the leaves as compared to untreated inoculated plants. These values are recorded in Table I.

2. *Bean Powdery Mildew Test*

Untreated pinto bean plants were dusted with spores of the powdery mildew fungus (*Erysiphe polygoni* De Candolle) and maintained in the greenhouse until mycelial growth appears in the leaf surface. The candidate chemical was then prepared and applied in the same manner as for the bean rust test. Four days later the leaves were examined for inhibition of further mycelial growth. Eradicative effectiveness was recorded as the lowest concentration, in ppm, which would provide a 75% or greater inhibition of viable, sporulating mycelium as compared to untreated inoculated plants. These values are recorded in Table I.

TABLE I

Preventive Action

| Compound Number | Bean Rust | Bean Powdery Mildew | Tomato Early Blight | Blue Grass Leaf Spot |
|---|---|---|---|---|
| 1 | 5 | 10 | 500 | 10 |

Eradicant Action

| Compound Number | Bean Rust | Bean Powdery Mildew |
|---|---|---|
| 1 | * | 50 |

*No control at 1000 ppm and not tested at higher concentrations

*Acaridicidal Evaluation Test*

The two-spotted mite (2SM), *Tetranychus urticae* (koch), was employed in tests for miticides. The test procedure was as follows:

Pinto bean plants (*Phaseolus sp.*) approximately 10 cm. tall, were transplanted into sandy loam soil in three-inch clay pots and thoroughly infested with two-spotted mites of mixed ages and sexes. Twenty-four hours later, the infested plants were inverted and dipped for two-three seconds in 50-50 acetone-water solution of the test chemical. Treated plants were held in the greenhouse, and seven days later mortality was determined for both the adult mites and the nymphs hatching from eggs which had been on the plants at the time of treatment. Test concentrations ranged from 0.05% down to that at which 50% mortality occurred.

$LD_{50}$ values are expressed below in Table II under the headings "2SM-PE" (i.e., post-embryonic) and "2SM-Eggs", in terms of percent concentration of the test compound in the solution.

TABLE II

| Compound Number | 2SM-PE (%) | 2SM-Eggs (%) |
|---|---|---|
| 1 | .003 | .01 |

**Claims**

1. N-1,1,2,2-tetrachloro-2-fluoroethylthio benzanilide.

2. A pesticidal composition comprising the compound as claimed in claim 1 and an inert carrier or diluent.

3. A pesticidal composition as claimed in claim 2 characterised in that it contains not more than 15% by weight of the compound of claim 1.

4. A pesticidal composition as claimed in claim 3 characterised in that it is a solution or suspension and further characterised in that it contains from 0.1 to 1.0% by weight of the compound of claim 1.

5. A method of controlling fungi characterised in that one applies to said fungi or a habitat therefor a fungicidally effective amount of the compound as claimed in claim 1.

6. A method of controlling acarids characterised in that one applies to said acarids or a habitat therefor an acaricidally effective amount of a compound as claimed in claim 1.

7. A method as claimed in claim 5 or claim 6 characterised in that the compound claimed in claim 1 is applied in the form of a pesticidal composition as claimed in any one of claims 2 to 4.

8. A process for the preparation of the compound as claimed in claim 1 which comprises reacting benzanilide with $ClSCCl_2CCl_2F$.

**Revendications**

1. Le N-1,1,2,2-tétrachloro-2-fluoréthyl-thio-benzanilide.

2. Composition pesticide, contenant le composé revendiqué dans la revendication 1 et un support ou diluant inerte.

3. Composition pesticide suivant le revendication 2, caractérisée en ce qu'elle contient le composé selon la revendication 1 en une proportion ne dépassant pas 15% en poids.

4. Composition herbicide suivant le revendication 3, caractérisée en ce qu'elle se présente sous forme d'une solution ou d'une suspension, contenant le composé selon la revendication 1 en une proportion comprise entre 0,1 et 1,0% en poids.

5. Procédé pour combattre les champignons, caractérisé en ce que l'on traite les champignons ou leur habitat avec une quantité efficace du composé selon la revendication 1.

6. Procédé pour combattre les acariens, caractérisé en ce que l'on traite les acariens ou leur habitat avec une quantité efficace du composé selon la revendication 1.

7. Procédé suivant l'une des revendications 5 et 6, caractérisé en ce que l'on applique le composé selon la revendication 1 sous forme d'une composition herbicide selon l'une quelconque des revendications 2 à 4.

8. Procédé de préparation du composé selon la revendication 1, caractérisé en ce que l'on fait réagir le benzanilide avec le composé de la formule $ClSCCl_2CCl_2F$.

**Patentansprüche**

1. N-1,1,2,2-tetrachlor-2-fluoräthylthiobenzanilid.

2. Pestizides Mittel, dadurch gekennzeichnet, daß es eine Verbindung nach Anspruch 1 und einen inerten Träger oder ein inertes Verdünnungsmittel enthält.

3. Pestizides Mittel nach Anspruch 2, dadurch gekennzeichnet, daß es nicht mehr als 15 Gew.-% Verbindung nach Anspruch 1 enthält.

4. Pestizides Mittel nach Anspruch 3, dadurch gekennzeichnet, daß es eine Lösung oder Suspension ist und daß es weiterhin 0,1 bis 1,0 Gew.-% Verbindung nach Anspruch 1 enthält.

5. Verfahren zur Kontrolle von Pilzen, dadurch gekennzeichnet, daß man auf die Pilze oder einen Standort hierfür eine fungizid wirksame Menge der Verbindung nach Anspruch 1 aufbringt.

6. Verfahren zur Kontrolle von Milben, dadurch gekennzeichnet, daß man auf die Milben oder einen Standort hierfür eine akarizid wirksame Menge einer Verbindung nach Anspruch 1 aufbringt.

7. Verfahren nach Anspruch 5 oder 6, dadurch gekennzeichnet, daß man die Verbindung nach Anspruch 1 in Form eines pestiziden Mittels nach einem der Ansprüche 2 bis 4 aufbringt.

8. Verfahren zur Herstellung der Verbindung nach Anspruch 1, dadurch gekennzeichnet, daß man Benzanilid mit $ClSCCl_2CCl_2F$ umsetzt.